Europäisches Patentamt

European Patent Office

Office européen des brevets

(19)

(11) Publication number: 0 356 191
A2

# (12) EUROPEAN PATENT APPLICATION

(21) Application number: 89308472.3

(22) Date of filing: 21.08.89

(51) Int. Cl.⁵: G 06 F 15/20

(30) Priority: 26.08.88 US 237264

(43) Date of publication of application:
28.02.90 Bulletin 90/09

(84) Designated Contracting States: DE FR GB IT

(71) Applicant: AMERICAN TELEPHONE AND TELEGRAPH COMPANY
550 Madison Avenue
New York, NY 10022 (US)

(72) Inventor: Freedman, Barry Allen
104 Yale Drive
Lincroft New Jersey 07738 (US)

Puthenpura, Sarat Chandrasekhar
1207 Dahlia Court
Jackson New Jersey 08527 (US)

Sinha, Lakshman P.
31 Pelham Place
East Brunswick New Jersey 08816 (US)

(74) Representative: Watts, Christopher Malcolm Kelway et al
AT&T (UK) LTD. AT&T Intellectual Property Division 5
Mornington Road
Woodford Green Essex IG8 OTU (GB)

(54) Methods and apparatus for efficient allocation of resources by optimizing nonlinear, convex functions with linear constraints.

(57) A method and apparatus is described for optimally allocating resources. The optimal allocation is done by minimizing a cost (which is a convex non-linear function of various allocation variables) subject to different constraints (which are linear functions of the allocation variables). The method initially picks a state of the above variables $(x_0)$ in the interior of the solution polytope (where the constraints are satisfied) and computes successive states $x_1, x_2, \cdots$, which progressively reduces the cost of allocation. The above iteration stops when suitable stopping rules are met.

The method employs (i) an affine scaling transformation (a variant of Karmarkar's projective transformation) of the linear constraints, (ii) an ellipsoid to sphere transformation of the curved cost surfaces, (iii) a potential search scheme on the curved constant cost surfaces, (iv) an affine scale adjustment mechanism, and (v) a line-search scheme.

EP 0 356 191 A2

Description

## METHODS AND APPARATUS FOR EFFICIENT ALLOCATION OF RESOURCES BY OPTIMIZING NON-LINEAR, CONVEX FUNCTIONS WITH LINEAR CONSTRAINTS

### Background of the Invention

This invention relates to systems for optimally allocating resources among a plurality of resource utilizers. More particularly, this invention relates to methods and apparatus which perform improved allocation of resources in a physical system whose allocations costs follow a non-linear function and whose allocated parameters are linearly constrained.

The need for resource allocation and optimization of systems arises in a broad range of industrial and technological areas. Examples of such are assignment of transmission facilities in telephone transmission systems, control of product mix in a factory, allocation of people to do a specified set of jobs such as operator services provided by telephone companies, inventory control, deployment of industrial equipment, and many others.

Resource allocation and optimization decisions are typically subject to certain constraints on various decision variables. Resources, for example, are always limited in availability, and sometimes their usefulness in a particular application also may be limited. Thus, the problem is to allocate the resources such that the constraints are satisfied while at the same time the cost of allocation is minimized, or the benefits arising from the allocation are maximized. The cost to be minimized can be any measure selected by the user, such as minimizing expenditures, minimize delay, minimizing inefficiency, etc.

A general method of characterizing and solving such optimization problems is via mathematical programming models. That is, the various resources of the system to be optimized are represented by a variable (one variable for each resource assignment), the collection of variables is viewed as a vector, a solution for the desired state of the system to be optimized is derived by evaluating a value for the vector through some selected procedure, and, lastly, the values of the components of the evaluated vector are said to represent the desired values of the allocated resources.

There are many physical optimization problems that, when modeled as described above, consist of linear relationships and thus belong to a class of problems and their solutions that are known as Linear Programming (LP). However, there is also quite a large number of other physical optimization problems that, when modeled as described above, comprise some linear relationships and some non-liner relationships. These are not LP problems. For example, the total amount of cargo carried by an air carrier cannot exceed the capacity of the planes which the carrier owns (at one cost) and which the carrier can lease (at different costs). This situation is typically modeled mathematically by a set of inequality constraints, and in such a situation, the cost function to be minimized may very well be non-linear. For example, the cost of leasing planes will go down (per plane) as the carrier increases the number of leased planes, until the supply of leasable planes diminishes to the point where per plane cost of leasing will begin to rise again. Such a relationship is called convex.

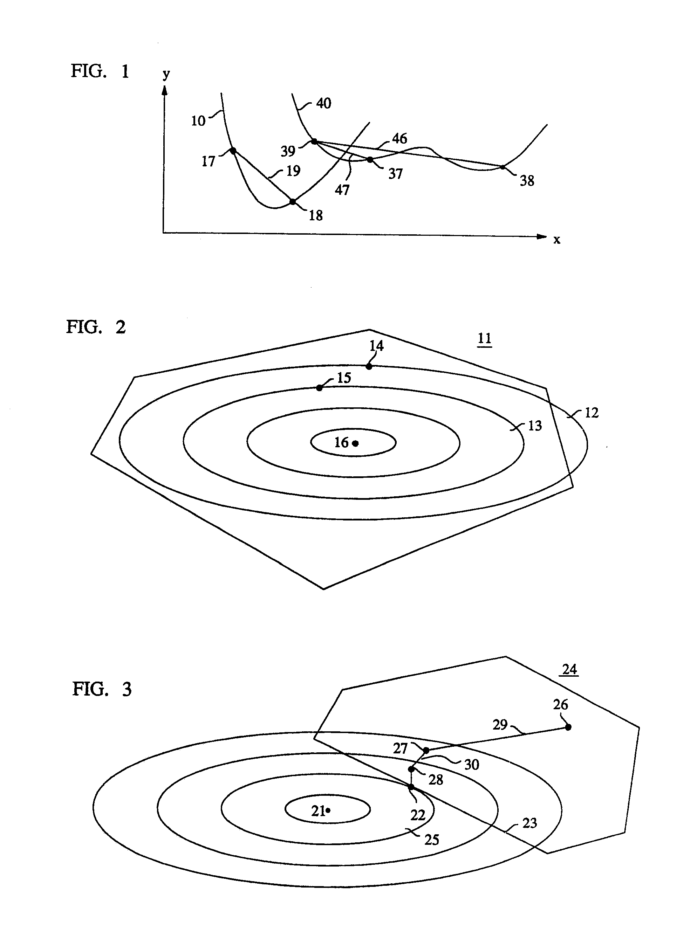

In the description that follows, physical systems where the resource allocation effort results in a mathematical model where the operating parameters are linearly constrained and the cost function to be minimized is non-linear, are referred to as "Non Linear Functions - Linear Constrains" (NLFLC) systems. Of particular importance is a subset of NLFLC systems which is characterized by a cost function that is quadratic. A quadratic cost function is a function that is convex, with the additional property that a line connecting any two points on the function do not cross any other point on the function. This is illustrated in FIG. 1, where curve 10 is shown as a function of the two variables x and y. Any two points on curve 10, such as points 17 and 18, can be connected with a line 19, and line 19 does not intersect curve 10. Curve 10, then, is quadratic. Curve 40, on the other hand, is not quadratic because points 39 and 38 are connected by line 46 and line 46 intersects curve 40 at two other points. However, line 47 which connects point 39 with point 37 does not intersect curve 40 at any other point. It can be said, therefore, that curve 40 has quadratic regions.

Resource allocation tasks that can be modeled as NLFLC problems can be visualized in a manner identical to that of conventional linear programming (LP) tasks as described, for example, in the seminal invention of N. Karmarkar, U.S. Patent 4,744,028, issued May 10, 1988. To wit, each parameter which can be altered in the process of allocating resources is viewed as a dimension in a multi-dimensional orthogonal space, and the set of feasible solutions is found within the volume defined by the linear constraints of the system, each of which describes a plane in the multi-dimensional space. The collection of the intersecting multi-dimensional planes forms that volume. The multi-dimensional surface formed by the intersecting multi-dimensional planes is often called a "polytope", and the sides are often called "walls". It has been known that, in general, the optimal solution to a NLFLC problem lies on a wall of the polytope. This is in contrast with the LP case (where the cost function is also a linear function of the parameters) where the optimal solution lies on a "vertex" of the polytope.

A good summary of prior art for solving NLFLC problems can be found in the book "Practical Optimization" by P. E. Gill, W. Murray, and M. H. Wright, published by Academic Press in 1981. However, these methods simply cannot solve very large problems, and the problems that these methods are capable of solving take a relatively long time to reach a solution. In short, none of these methods are suitable for solving even moderately-sized resource allocation problems in real-time (that is, sufficiently fast) to provide more or less continuous control of an ongoing process, system, or apparatus. The deficiency stems from the fact that these methods consume a lot of computer time before they come up with an optimal allocation strategy.

To overcome the computational difficulties associated with the known methods to solve linear programs, N. K. Karmarkar invented the new method disclosed in the aforementioned U.S. Patent No. 4,744,028. According to this method, a starting feasible point is selected from the interior of the polytope, and a series of moves are made in the direction that, locally, points in the direction of greatest change toward the optimal vertex of the polytope. This direction, which is the direction of steepest "descent" does not depend on the parameters (variables) to be optimized. A step of computable size is then taken in that direction, and the process is repeated until a point is reached which is close enough to the desired optimal vertex. One specific aspect of Karmarkar's algorithm is that the above mentioned procedures are conducted in a transformed space and the outcome is mapped back into the original space at each iteration. It is important to remember that the transformation performed by Karmarkar (called the "projective transformation") is with respect to the constraints of the problem. No special transformation is done (as it is not necessary) with respect to the cost function. Under projective transformation, the linearity of the cost function is preserved.

Alas, this method is not suitable for optimizing general NLFLC systems because the non-linear cost function results in a "direction of descent" (gradient) that is a function of the parameters (variables) to be optimized. Neither projective transformation nor its variants (e.g., affine scaling) rectify this situation.

## Summary of the Invention

Our invention obtains a solution for the resource allocation task in a manner that, in part, is similar to that described by Vanderbei in U.S. Patent 4,744,026, issued May 10, 1988. Specifically, the resource allocation task is solved iteratively, and at each iteration a transformation is performed prior to affine scaling. The transformation rectifies the aforementioned problems by transforming the modeled system to convert the convex cost function (having ellipsoidal constant cost surfaces) to spherical form (having spheroidal constant cost surfaces). Once transformed, affine scaling is applied and the iteration is continued.

Because of this transformation, the search for an optimal point in the polytope becomes very efficient due to special geometrical properties of spheres. Without this transformation, the search would be very inefficient, or in some cases it may even fail completely.

Similar to what one may experience in the LP case, sometimes it is possible to get "attracted" near a wall of the polytope, which may not contain the optimal solution. This potential difficulty is overcome by "pushing" the "attracted" solutions away from the wrong wall, along the curved cost surface, to a better position. This procedure speeds up the solution procedure considerably.

As indicated above, the QP problem (quadratic problem) is a special case of the general NLFLC problem. Whereas in the QP problem the cost function changes in a relatively slow and predicatable way, in the general NLFLC problem the characteristic of the cost surface can change dramatically from point to point. To obtain an improved cost allocation in the presence of such a varying cost function, a line search operation is performed to track the local optimal point from step to step to insure that a step is not taken that passes beyond the minimum cost at the chosen direction.

## Brief Description of the Drawing

FIG. 1 depicts the convexity property of a function;

FIG. 2 is a graphical representation of the special case of optimal resource allocation for a QP problem;

FIG. 3 is a graphical representation of the general case of optimal resource allocation for a QP problem along with the iteration steps of the new algorithm;

FIG. 4 is a depiction of the "zig-zagging" phenomenon of search directions due to ellipsoidal cost surfaces;

FIG. 5 is an illustration of the computational advantage due to spherical cost surfaces;

FIG. 6 is an illustration if the affine scaling concept;

FIG. 7 is an illustration of the potential push on curved cost surfaces for a QP case;

FIG. 8 is a graphical representation of the concepts of the "projected normal" vector and the "projected push" vector used for the potential push;

FIG. 9 is an illustration of the modification incorporated to the push used for QP, to cater the general NLFLC case;

FIG. 10 is a general flow chart which shows the procedure which separates the QP from general NLFLC problems and chooses the appropriate process to solve them;

FIG. 11 is a flow chart which describes the solution procedure (process A) of a QP problem using the new algorithm;

FIG. 12 is a flow chart which describes the solution procedure (process B) of a general NLFLC problem (other than QP problem) using the new algorithm; and

FIG. 13 is a block diagram of a resource allocation/control system using the ideas described FIGS. 1 through 7.

## Detailed Description

### The Task

The following description addresses the QP problem first because it is simpler to understand and because it is an important subset of the NLFLC set. Thereafter, the results are extended to the general class of NLFLC problems, and some modifications are incorporated. Also, for the sake of simplicity and taking into account of the limitations of human perception, all of the graphical illustrations are confined to two dimensions only. However, the number of dimensions (number of decision variables) in practical problems can be hundreds, thousands, or even millions. Moreover, without losing generality, only cost minimization is discussed, but it is understood that benefit maximization can be treated in a similar fashion.

FIG. 2 presents a two dimensional polytope 11 which encompasses the set of all operational states of the system. Every point within the polytope corresponds to a feasible state of allocation. Thus, point 14 inside polytope 11 is a feasible point. In FIG. 2, the elliptical contours 12 and 13 are constant cost surfaces. That is, (e.g., state 15) the cost of allocation associated with all points on surface 13 is identical.

Furthermore, the cost is smaller than the cost of allocation of all points on surface 12 (e.g., state 14). The challenge in connection with the FIG. 2 system is to arrive at a state which results in the least allocation cost (corresponding to the inner most ellipse) and at the same time maintain feasibility (stay inside the polytope). This arrive-at state is the optimal solution to the allocation task, which in FIG. 2 is point 16. It may be noted that point 16 is the optimal allocation with no constraints considered. This is a very special case of the QP problem and such occurrence is extremely rare in real-life physical resource allocation problems.

A more realistic QP case is illustrated by FIG. 3. The unconstrained optimum 21 is not feasible since it is outside polytope 24. Therefore, the optimal state for the FIG. 3 system is point 22, which lies on wall 23 of polytope 24. The optimal cost is the cost associated with the ellipse 25.

Our invention starts with an initial feasible point 26, and proceeds radially, but always staying in the interior of polytope 24 (thus maintaining the feasibility), in steps 29, 30, etc., to states 27, 28, etc., each closer to the optimum feasible state 22.

### The QP Situation

In standard vector notations, a typical QP problem can be expressed as follows:

minimize

$$J = \frac{1}{2}x^{T}Qx - c^{T}x \quad (1)$$

subject to a set of linear constraints

$$Ax = b \quad (2)$$

and a positivity constraint $x \geqq 0$ on $x$ where

$x$ is an $n$ component vector called the "solution vector"

$Q$ is an $n \times n$ matrix (at least positive semi-definite) called the "cost matrix"

$c$ is an $n$ component vector called "cost vector"

$A$ is an $m \times n$ matrix called the "constraint matrix"

and

$b$ is an $m$ component vector which depicts the constraint limits.

The above representation of the QP problem is commonly referred to as the "standard form". See Gill et al., referenced infra. All objective functions and all constraint relationships pertaining to QP proglems can be reduced to this form by simple algebraic manipulations, with the help of what are known as "slack" and "surplus" variables. These techniques are well-known in the prior art, as described, for example, in the aforementioned 4,744,026 Vanderbei patent.

For the special QP case depicted in FIG. 2 (where the absolute minimum is within the polytope) the optimal solution and the corresponding cost can be easily calculated as,

$$x_{optimum} = Q^{-1}c \quad (3)$$

and it is straightforward to compute

$$J_{optimum} = \frac{-c^{T}Q^{-1}c}{2}. \quad (4)$$

For the general case of QP problems (where the unconstraint optimum lies outside the polytope) the solution can proceed by following the gradient of the cost very much as it is done by Karmarkar. However, this procedure may be inefficient for the reasons explained below.

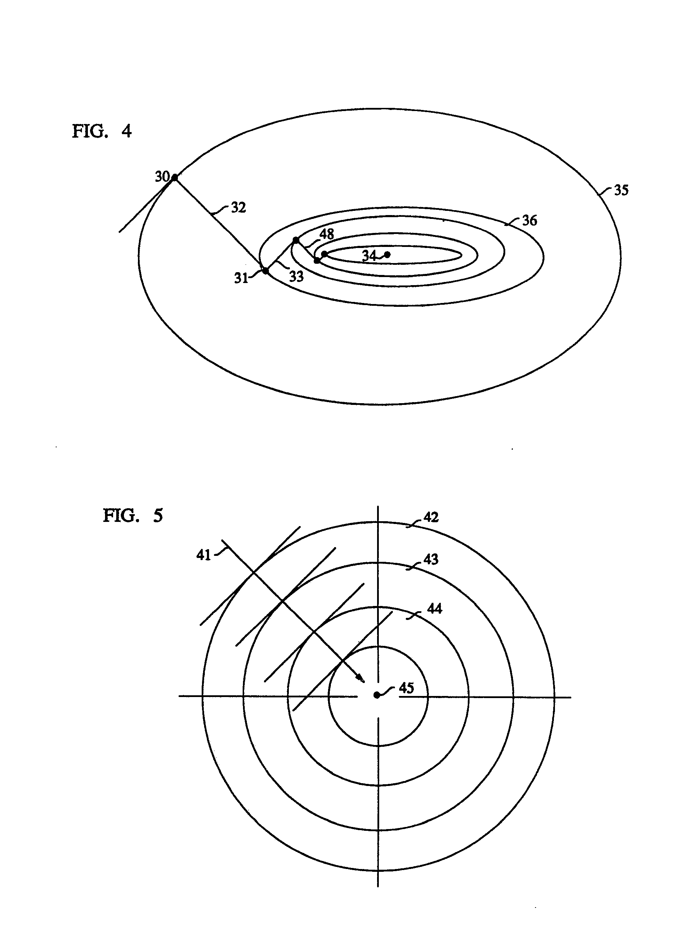

With reference to FIG. 4, lines 32, and 33 are the gradients (hence the search directions) which are orthogonal to constant cost surfaces 35, and 36. Proceeding in accordance with gradient concept alone, the solution would start from one state, say 30, and proceed along the gradient (32) to another state, say 31. State 31 is selected based on the criterion that is related to the change in the gradient; and more specifically, based on a determination that the current direction (32) is tangential to another constant cost surface, such as surface 36. When that condition is detected, a new gradient is computed and the solution proceeds from state 31 to the next state, such as the state represented by point 48. The aim is to reach the optimal state 34 in this manner. But, as can be observed, the procedure "zig-zags" considerably before reaching this point.

Our invention overcomes this difficulty by transforming the elliptical (or ellipsoidal--in multi-dimensions) cost contours to circular (or spheroidal-- in multi-dimensions) contours. Thus, with reference to FIG. 5, because of the special geometrical properties of spheroidal surfaces, the search direction 41 is always orthogonal to contours 42, 43, 44 etc., and this search direction is oriented closely toward the optimal state, 45.

The mathematical translation of the above idea is the transformation of the variable $\mathbf{x}$ (solution vector) to

$\mathbf{x}' = \mathbf{L}^T\mathbf{x}$  (5)

where $\mathbf{L}$ is a vector that is related to the cost matrix $\mathbf{Q}$ by

$\mathbf{Q} = \mathbf{L}\mathbf{L}^T.$  (6)

Note that $\mathbf{x} \geq \mathbf{0}$, but $\mathbf{x}'$ is unconstrained.

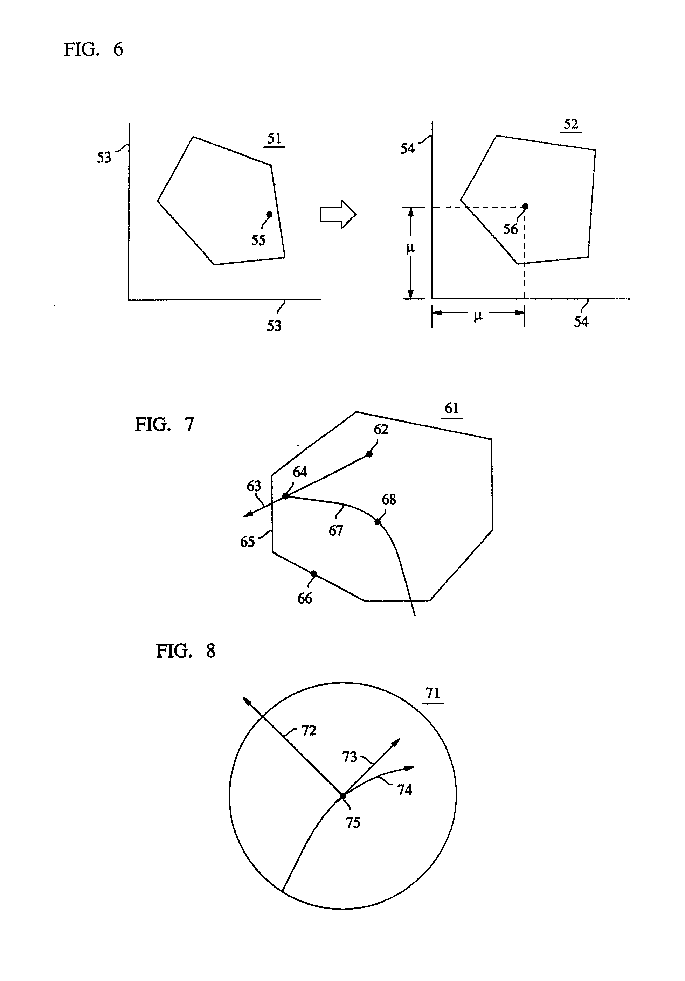

Following this transformation, the entire problem is scaled (affine scaling) by mapping the current state (point) to a common distance $\mu$ from the constraint walls, where $\mu$ is a positive scalar. This process can be mathematically represented by the product $\overline{\mathbf{D}}^{-1}\mathbf{x}$, where $\overline{\mathbf{D}}$ is a diagonal matrix with diagonal elements set to $(1/\mu)x_i$. Referring to FIG. 6 where the unscaled and scaled polytopes are shown, the current state 55 in the original (unscaled) polytope 51 is mapped to state 56 in the scaled polytope 52, forcing it to be at a distance $\mu$ from walls 54 in the positive quadrant.

With some mathematical manipulations, it can be shown that the negative of the direction of movement (step direction) from a state $\mathbf{x}^0$ to minimize the cost of allocation is expressed by,

$\delta\mathbf{x}_p = -[\mathbf{I} - \mathbf{H}\mathbf{A}^T(\mathbf{A}\mathbf{H}\mathbf{A}^T)^{-1}\mathbf{A}]\mathbf{H}(\mathbf{Q}\mathbf{x}^0 - \mathbf{c})$  (7)

where

$\mathbf{H}$ equals $(\lambda\mathbf{Q} + \mathbf{D}_{\mathbf{x}^0}^{-2})^{-1}$,

$\mathbf{D}_{\mathbf{x}^0}$ is a diagonal matrix with the diagonal entries the components of $\mathbf{x}^0$, and

$\lambda$ is a positive "scale" parameter, which advantageously is set to $\mu^{-2}$.

The next task is to calculate the step length which determines the size of the step (movement) away from $\mathbf{x}^0$ in the direction $\delta\mathbf{x}_p$.

One constraint, of course, is the presence of the walls of the polytope. The step length due to this constraint is limited by

$$\alpha_1 = \frac{0.97}{\displaystyle\max_i [\delta\mathbf{x}_{p_i} / \mathbf{x}_i^0]} \qquad (8)$$

which goes takes up to 97% percent of the distance to the nearest constraint wall. Another constraint, however, relates to the curvature of the cost surface. As shown in FIG. 4, while proceeding in the direction $\delta\mathbf{x}_p$, a point is reached where the cost stops to decrease and begins to increase. Going beyond this point is clearly not advisable, and therefore, another value is computed that evaluates the step length to the minimum cost along the chosen direction. This step length is

$$\alpha_2 = \frac{[\delta\mathbf{x}_p^T(\mathbf{Q}\mathbf{x}^0 - \mathbf{c})]}{[\delta\mathbf{x}_p^T\mathbf{Q}\delta\mathbf{x}_p]}. \qquad (9)$$

The actual step length is, of course, the smaller of the two, i.e.,

$\alpha = \min(\alpha_1, \alpha_2)$

The new state $\mathbf{x}^1$ is obtained by evaluating,

$\mathbf{x}^1 = \mathbf{x}^0 - \alpha\delta\mathbf{x}_p.$  (10)

The expression for the descent direction, $\delta\mathbf{x}_p$, is called the "null space" formulation, because it is obtained by the projection of the gradient $(\mathbf{Q}\mathbf{x}^0 - \mathbf{c})$ on to the null space of $\mathbf{A}$. An alternate form of this would be the "range space" formulation. The only difference between the two formulations is the way in which the projection matrix is constructed. It can be shown that the direction for the range space formulation of the QP algorithm is given by

$\delta\mathbf{x}_p = -\mathbf{Z}^T(\mathbf{Z}\lambda\mathbf{Q} + \mathbf{D}^{-2}_{\mathbf{x}^0})\mathbf{Z}^T)^{-1}\mathbf{Z}(\mathbf{Q}\mathbf{x}^0 - \mathbf{c}),$  (11)

where $\mathbf{Z}$ is called the "orthogonal compliment" matrix of $\mathbf{A}$ and satisfies the feasibility condition $\mathbf{A}\mathbf{Z}^T\mathbf{v} = \mathbf{0}$ for any vector $\mathbf{v}$.

To construct $\mathbf{Z}$, the matrix $\mathbf{A}$ may be represented by $[\mathbf{B} \mid \mathbf{N}]$ where $\mathbf{B}$ and $\mathbf{N}$ are of dimensions $m \times m$ and $m \times (n-m)$ respectively, and then

$\mathbf{Z} = [(-\mathbf{B}^{-1}\mathbf{N})^T \mid \mathbf{I}]$  (12)

where $\mathbf{I}$ represents the "identity matrix" of dimension m. The scale parameter $\lambda$ can be adjusted to make the convergence of the algorithm faster. (It can be shown that for the LP case, the scale is totally absorbed in the step length $\alpha_1$, and consequently scale adjustments are ineffective). The way to do this is to perform a "search on $\lambda$, but it should be noted that every time the value of $\lambda$ is changed, a matrix inversion must be performed. Therefore, the following recursion is useful in adjusting $\lambda$ in the neighborhood of some $\lambda^0$ without performing

the inversion each and every time.

$$\delta x_p = \sum_{n=0}^{n=\infty} (\lambda^0 - \lambda)^n g^{(n)} \qquad (13)$$

where

$g^{(n)} = P^0 Q g^{(n-1)}$,

$g^{(0)} = P^0 g^0$,

$P^0$ is the projection matrix, $[I - HA^T(AHA^T)^{-1}A]H$, evaluated at $\lambda^0$, and

$g^0$ is the gradient of the cost function evaluated at $x^0$ which in this case is $Qx^0 - c$.

Also, sometimes it is possible that the successive solutions of the algorithm to be near a constraint wall. Under that situation, the convergence of the algorithm can be slow. When this happens, a potential search method can be used to recenter the solution on the current cost surface. With reference to FIG. 7, 61 is the polytope and 62 is the state from which a move is made in the direction 63 to reach the state 64, which is near wall 65. The optimum is state 66. What is necessary to do is to slide 64 along the constant cost trajectory 67, to recenter at a better position, such as position 68. This is what we call the potential search.

The essential idea behind the potential search is to construct a "push vector" which pushes the solution away from the walls. Of course, the path traced by this push vector should be of constant cost, while maintaining feasibility.

The push is accomplished by evaluating $n_p$ which is the projected normal at $x_0$, and by evaluating $v_p$ which is the projected push direction at $x_0$, where $x_0$ is the point that is to be pushed away from the walls. Letting $x_t$ be the path traced by $x_0$ so that the cost is unchanged, we compute

$n_p = Z^T(ZQZ^T)^{-1}Zg_0$    (14)

and

$v_p = C \, Z^T(ZHZ^T)^{-1}Zv_0$    (15)

where

    (i) $Z$ is such that $AZ^Tv = 0$ for any vector $v$,

    (ii) $g_0$ is the gradient to the curved level set at $x^0$,

    (iii)

$$C = \left[ \frac{g_0^T Z^T (ZQZ^T)^{-1} Z g_0}{v_0^T Z^T (ZHZ^T)^{-1} ZQZ^T (ZHZ^T)^{-1} Z v_0} \right]^{\frac{1}{2}},$$

    (iv) $H = (\lambda Q + D^{-2})$, and

    (v) $v_0$ is the "Karmarkar Push Vector" obtained as

$v_{0_i} = x_{0_i}{}^{-1} - \beta g_{0_i}$   for $i = 1, 2, \cdots n$

$$\text{where } \beta = \frac{g_0 \cdot v'_p}{g_0 \cdot g_p} \text{ and}$$

$v'_p = CZ^T(ZHZ^T)^{-1}Zx_0^{-1}$ , $g_p = CZ^T(ZHZ^T)^{-1}Zg_0$.

Letting $a$ be $\|Q\|$, where $\| \ \|$ denotes the spectral norm, a "search" along the trajectory

$x_t = x_0 + (\cos at - 1)n_p + (\sin a\,t)v_p$    (16)

can be performed so that the "potential function"

$$-\sum_{i=1}^{i=n} \log(x_{t_i})$$

is minimized. Referring to FIG. 8 as an example, 71 depicts the spherical surface, 72 and 73 are the projected normal and the projected push vectors at state 75 vectors, and curve 74 represents the trajectory of constant cost.

### Generalizing to NLFLC

Our QP algorithm can be generalized to other NLFLC optimization problems in systems where the cost function is other than quadratic but still convex. The task is then represented by

min $f(x)$    (17)

subject to a set of linear constraints

$Ax = b$ and $x \geq 0$.    (18)

Letting $g(x)$ be the gradient of $f(x)$ at $x$, (i.e., $\nabla(x) = g(x)$), and $G(x)$ be the Hessian matrix of f at $x$ (i.e.,

$\nabla^2 f(x) = G(x)$), and replacing $Q$ by $G(x)$ and $Qx - c$ with $g(x)$ in our QP algorithm, yields a new algorithm to solve the NLFLC problem. Unlike the QP algorithm, however, the $Q$ term depends on the vector $x$, and this invalidates our analytical expression (9) for the step size $\alpha_2$. The step size $\alpha_2$ in this case is then determined by a fast "line search method", where the step length of descent is determined by successive evaluations of $f(x)$ in the descent direction.

Incorporating the required line search, our new algorithm for solving the NLFLC problem can be stated as follows:

Choose two positive constants $\beta$ and $\gamma$ such that $0 < \beta < 1$ and $0 < \gamma < 1$, along with a starting feasible solution $x^0$. Then, compute the search direction $\delta x_p$ from equation (7) or (11) by substituting $G(x^0)$ and $g(x^0)$ in place of $Q$ and $Qx^0 - c$ respectively. Use $\alpha_2$ in (9) as an estimate for the potential step size, where $Q$ is replaced by $G(x^0)$. Lastly, obtain the true step length $\alpha$ such that

$$f(x^0 - \alpha\delta x_p) \leqq f(x^0) - \gamma\alpha g^T(x^0)\delta x_p \quad (19)$$

where

$$\alpha = \min(\alpha_2\beta^h, \alpha_1) \quad (20)$$

the term $\alpha_1$ is given by equation (8) and $h$ is the first positive integer (including zero) that satisfies equation (19). It can be shown that the line search algorithm converges (reaches the optimal answer) under reasonably weak assumptions.

The rest of the procedure is the same as the QP algorithm, except for the following difference in the potential search. While performing the potential search, we recenter along a path based on a quadratic approximation of $f(x)$. This recentering scheme maintains feasibility but does not keep $f(x)$ constant.

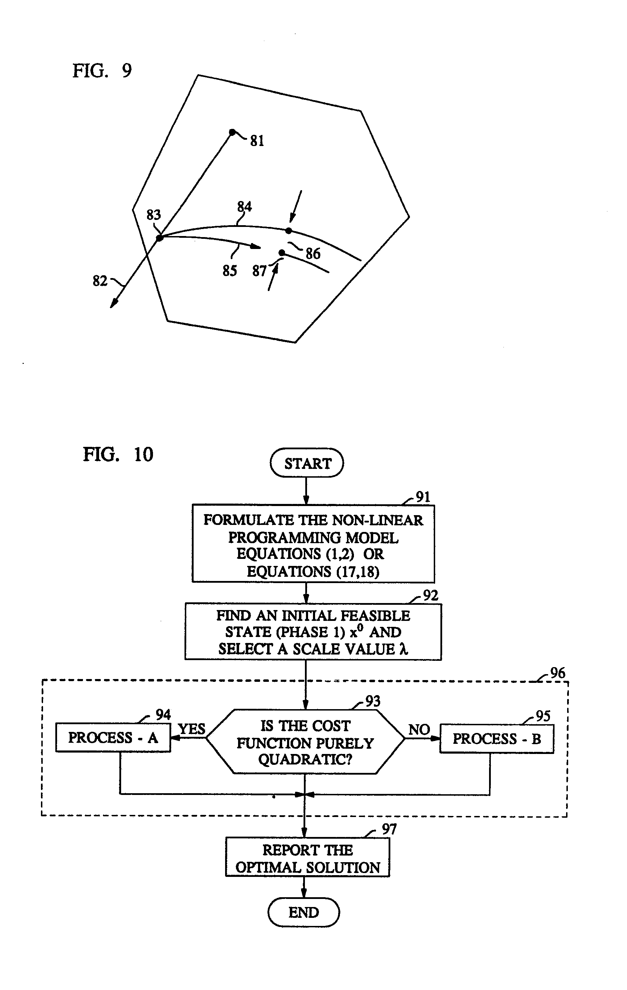

Referring to FIG. 9 for example, state 81 is translated in direction 82 to state 83. This solution is then pushed along the constant cost surface 85 based on the quadratic approximation of $f(x)$. The actual constant cost surface is 84, and we stop the push along the trajectory of the approximation of $f(x)$ when the difference between trajectories 84 and 85 (which in this case is distance 86) exceeds a predefined value, say $\delta J$. Thereupon, we start a new iteration.

Finally, a stopping criterion for the new algorithm (for QP as well as NLFLC) could be

$$\underset{i}{\max} \quad \delta x_p \leqq \varepsilon \quad (21)$$

where $\varepsilon$ is some fixed small positive number and

$$[I - A^T(AHA^T)^{-1} AH] [QX^0 - c] \geqq 0 \quad (22)$$

The Process

The process of improving the operational state of a commercial enterprise such as improving the state of resource allocations of the enterprise involves first identifying the resources that are available, determining the resource allocation needs and constraints, and selecting a cost function to be minimized that makes sense for the particular circumstance of the enterprise. All of this information is then represented by symbols (variables) for easy manipulation, and the task is structured in terms of the represented variables as a minimization task. When so structured and when it is found that the constraint relationships are linear but the cost function is convex, then the principles of our invention can be applied to an advantage.

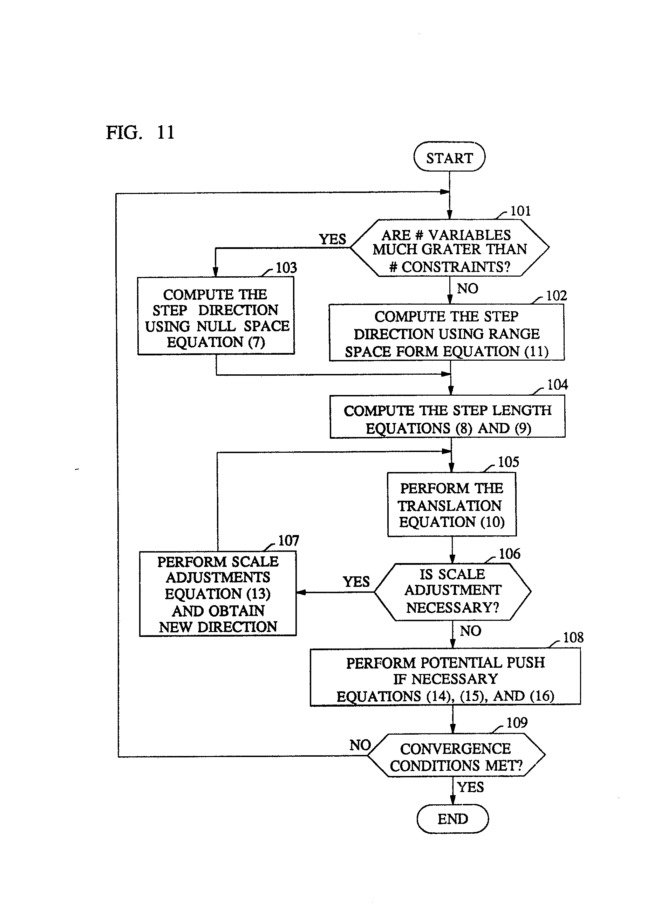

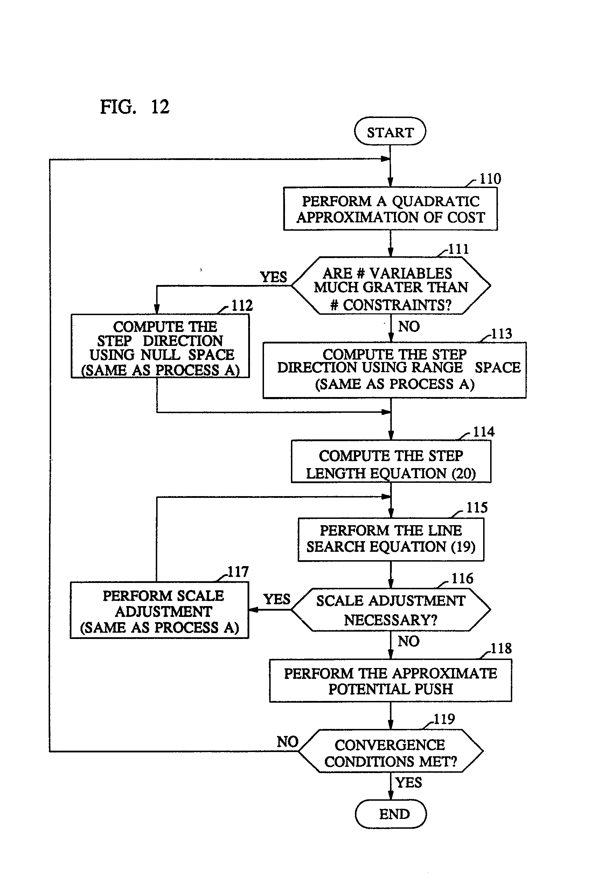

In such a circumstance, according to FIG. 10 which outlines our method in broad terms, the task is formulated as a QP or general NLFLC task in block 91, and in block 92 an initial feasible state of the system is selected $(x^0)$, and a scale parameter $\lambda$ is chosen (usually, 1.0). This is called the "phase 1" problem. As the constraints are linear, one can use the same phase 1 operation of LP case. This process is disclosed in the aforementioned U.S. Patent No. 4,744,026 issued to R. J. Vanderbei. Of course, in existing systems the task of chosing an initial state is trivial since the existing state of the enterprise can be selected as the initial state. Continuing with FIG. 10, block 93 represents a process to detect whether the optimization problem is QP or general NLFLC. If it is QP, process A (block 94) is invoked; otherwise process B (block 95) is invoked. Thus, block 96 represents the entire iterative scheme (though in very general terms) to solve all NLFLC problems. Lastly, step 97 makes the assignment, as determined by block 96, to place the enterprise in the neighborhood of the optimum state of the system. Processes A and B are described in more detail in FIGS. 11 and 12.

Referring to FIG. 11, block 101 is the detection step for determining whether the number of variables (n) is more than the number of constraints (m). If (m > n), then we proceed to block 103 to use the null space formulation to obtain the descent direction. Otherwise, we go to block 102 to use the range space formulation. Next, the two step lengths ($\alpha_1$ and $\alpha_2$) are computed in block 104, and block 105 performs the translation from $x^0$ to $x^1$ in the direction of descent using the step length computed above. After that, block 106 determines whether a scale adjustment of the initially chosen scale value should be done, and if advisable, the process continues to block 107 where the adjustment is made, a new direction is evaluated, and control is returned to block 105. When it is determined that no scale adjustment is necessary, control transfers to block 108 where, if necessary (that is, if $\alpha = \alpha_1$), a potential push is performed in block 108 to recenter the solution, as described before. Finally, block 109 checks the convergence condition, such as the one expressed by equations (21) and (22). When the condition is met, process A terminates; otherwise control returns to block 101. The above-described steps are repeated until the convergence conditions are met.

Process B is very similar to process A and it is illustrated in FIG. 12. Block 110 performs a quadratic approximation on $f(x)$. Blocks 111, 112, and 113 are the same as blocks 101, 103, and 102 or process A. In block 114, we compute the step length as defined by equation (19) and use it in conjunction with the search direction that is obtained from block 112 or 113. This operation is done in block 115, which essentially uses equation (20). Blocks 116 and 117 are identical to blocks 106 and 107 of process A. In block 118, we perform the approximate potential push which was described before in connection with FIG. 9, essentially using equations (14) through (16). Block 119 is identical to block 109 and the whole process B is repeated until these conditions are satisfied.

## The Apparatus

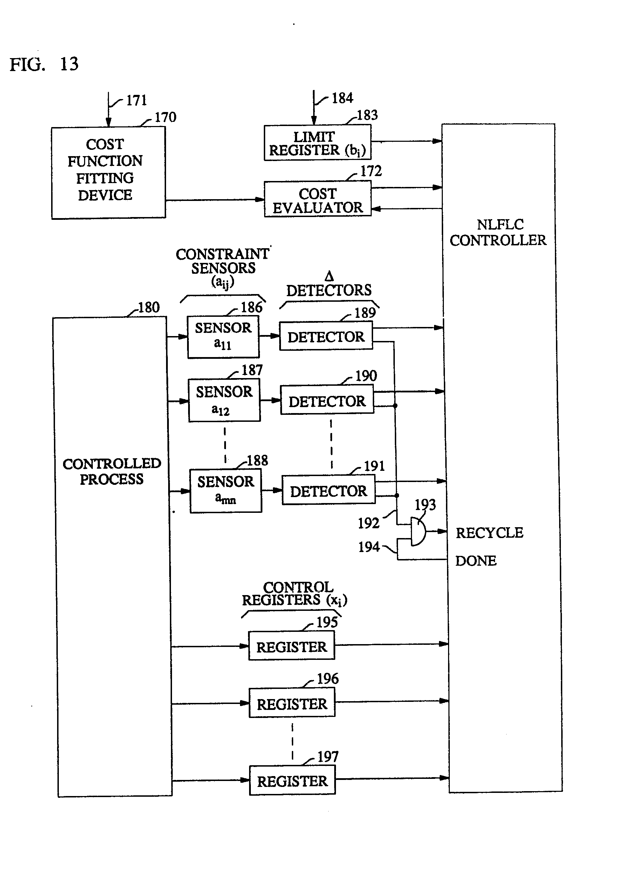

FIG. 13 illustrates a process control system in accordance with the principles of our invention. It may be a telephone communication system, a manufacturing process, a navigation process, a financial system (e.g., portfolio management system), a lease of planes (as described before) arrangement, or any other industrial, technological or economic process which is to be optimized and which exhibits the "convexity" property discussed above.

A cost function evaluation device 170 receives the cost data (information on how allocation cost varies) on bus 171 from a computer terminal or some other separate process. Device 170 aims to accommodate the fact that costs are not necessarily fixed and that different enterprises may choose different cost arrangements that they may wish to minimize. Device 170 fits the incoming information to a cost function representation, which for the systems under consideration is in general non-linear and more particularly, convex. The information is passed by device 170 to cost evaluator 172 which evaluates the value of the fitted cost function at any state of the system. That is, given an operational state of the system represented, device 172 evaluate the cost in accordance with the given cost function. To evaluate the cost, device 172 must be provided with a description of the state of the system, and that information is provided by controller 185 via lead 173. The cost determination is passed to controller 180 via lead 174.

Similarly, a limit register 183 is provided to store the physical limits on the allocation variables. These limits can be entered into the system via lead 184, like the cost data.

The system of FIG 13 also includes sensors 186, 187, $\cdots$, 188 which dynamically sense the constraint coefficients of the enterprise. In the airline industry, as an example, the number of planes at different locations will, of course, change with time, and even the number of operating airports will fluctuate. It is these "environmental" changes that sensors 186-188 monitor. Each constraint sensor 186-188 has a corresponding change detector, 189, 190, $\cdots$, 191. The detectors detect the changes in the output of each of the respective sensors. A change indication signal from each of these detectors is applied to change bus 192 and thence to AND gate 193. Also applied to gate 193, on lead 194, is a signal from controller 185 indicating the termination of the optimization procedure. Through a separate output port at each of the change detectors, the outputs from sensors 186-188 are applied to controller 185.

Controller 185 of FIG. 13 is, in the preferred embodiment, a programmed digital computer having stored therein the program which implements the flowcharts of FIGS. 10, 11 and 12, making use of the ideas presented in FIGS. 1 through 9. Controller 185 may also comprise a complex of hardwired circuits, designed to carry out the operations described by the flowcharts of FIGS. 10 through 12, or to realize the ideas of FIGS. 1 through 8.

Since NLFLC controller 185 of FIG. 12 utilizes the extremely fast procedures illustrated in FIGS. 3, 4, or 5, control values are available for registers 195-197 in a very short time. Moreover, as the constraints change, these changes are sensed by sensors 186-188, detected by detectors 189-191, and used partially to enable AND gate, 193. When the procedures of FIGS. 10-12 are complete, controller 185 generates process control signals and transfers the signals to registers 195-197. Simultaneously, controller 125 generates an enabling signal on lead 194 to AND gate 193, completing the enablement of AND gate 193. The entire process is then repeated.

A typical type of problem in modern control theory area to which the present invention can be applied is stochastic control of systems, for example the control of robots. A description of these type of problems can be found in the book "Computer Controlled Systems" by K. J. Astrom and B. Wittenmark, published by Prentice Hall in 1986.

Other problems which would benefit from our invention are financial portfolio management, optimal loading problems of power utility companies, and optimal staff allocation problems.

It should be noted that the matrices involved in most practical NLFLC cases are sparse in nature and sparse matrix techniques can be used in the operations depicted in FIGS. 10 through 12.

## Claims

1. A method for allocating industrial facilities in an enterprise so as to reduce the cost associated with a selected allocation of said facilities in said enterprise, where said allocation of said facilities is linearly constrained by a set of constraints and said cost is expressed in terms of a given convex function, said method comprising facilities allocation iterations where each iteration receives a potential facilities allocation having an associated cost,and develops a potential facilities allocation for the next iteration as long as a selected stopping criterion is not met, each iteration further comprising the steps of:

performing a scaled spheroidal transformation that operates on representation of said received potential facilities allocation to form a transformed representation of said potential facilities allocation such that components of said transformed representation of said potential facilities allocation are equal (affine scaling), and the sum of squared components of transformed representations of other facilities allocations having the same associated cost is equal to the sum of squared components of said potential facilities allocation (spheroidal transformation);

developing a translation vector for use in creating said new potential facilities allocation for the next iteration;

testing the components of said translation vector to develop a process-stop signal when said translation vector falls below a preselected threshold;

developing said new potential facilities allocation for the next iteration when said translation vector fails to fall below said preselected threshold; and

applying the last developed new potential facilities allocation to said enterprise when said translation vector falls below a preselected threshold.

2. A method for allocating industrial facilities in an enterprise so as to reduce the cost associated with a selected allocation of said facilities, where said allocation of said facilities is linearly constrained and said cost is expressed in terms of a given convex function, said method comprising facilities allocation iterations where each iteration receives a potential facilities allocation, and develops a potential facilities allocation for the next iteration as long as a selected stopping criterion is not met, each iteration further comprising the steps of:

transforming the representation of the potential facilities allocation, vector $x^o$, to develop a spheroidal cost function for said enterprise such that the sum of squared components of the transformed facilities allocation representation (components of $x^{o'}$) is a constant value and the sum of squared components of representations of transformed other facilitaies allocations (components of $x^{1'}, x^{2'}, \cdots$) having the same cost as the cost of said potential transformed facilities allocation ($x^{o'}$) is equal to said constant value;

scaling the representation of the potential facilities allocation, $x^o$, to move the potential facilities allocation to a scaled potential facilities allocation represented by vector $x^{o''}$ and having identical scaled facility allocations (components of vector $x^{o''}$);

developing a translation vector for use in creating said new potential facilities allocation for the next iteration;

testing the components of said translation vector to develop a process-stop signal when said translation vector falls below a preselected threshold;

developing said new potential facilities allocation for the next iteration when said translation vector fails to fall below said preselected threshold; and

applying the last developed new potential facilities allocation to said enterprise when said translation vector falls below a preselected threshold.

3. The method of claim 1 where said step of performing a scaled spheroidal transformation comprises the steps of

transforming the representation of the potential facilities allocation to develop a spheroidal cost function such that the sum of squared components of the transformed facilities allocation representation is a constant value and the sum of squared components of representations of transformed other facilities allocations having the same cost as the cost of said potential transformed facilities allocation is equal to said constant value, followed by the step of

scaling the representation of the potential facilities allocation, $x^o$, to move the potential facilities allocation to a scaled potential facilities allocation and having identical scaled facility allocations.

4. The method of claim 1 where said step of performing a scaled spheroidal transformation comprises the steps of

scaling the representation of the potential facilities allocation, $x^o$, to move the potential facilities allocation to a scaled potential facilities allocation and having identical scaled facility allocations, followed by the step of

transforming the representation of the potential facilities allocation to develop a spheroidal cost function such that the sum of squared components of the transformed facilities allocation representation is a constant value and the sum of squared components of representations of transformed other facilities allocations having the same cost as the cost of said potential transformed facilities allocation is equal to said constant value.

5. A resource allocation system for allocating facilities of an enterprise so as to reduce the cost of operating said enterprise with a selected allocation of said facilities, where said allocation of said facilities is linearly constrained and said cost is expressed in terms of a given convex function, comprising:

an N plurality of sensors, where N is a positive integer, for determining the existing state of allocations of said facilities;

means for applying an allocation of said facilities;

means responsive to said sensors for storing output signals of said sensors in an alterable memory, thereby forming a stored state of allocations of said facilities, said state having N components;

transform means responsive to said means for storing for performing a scaled spheroidal transformation of said stored state of allocations to form a transformed allocation state signal such that components of said transformed allocation state signal are equal, and the sum of squared components of transformed representations of other facilitaies allocation states having the same associated cost is equal to the sum of squared components of said transformed allocation state signal;

9

translation menas responsive to said transform means for developing a translation vector signal;

comparison means responsive to said translation means for developing a process-stop signal when said translation vector signal falls below a preselected threshold;

means responsive to said comparison means for developing an improved facilities allocation state and storing said improved facilities allocation state in said alterable memory; and

means responsive to said process-stop signal for applying most recent one of said improved facilities allocation states to said means for applying an allocation of said facilities.

6. A system for optimizing the performance of controlled process in accordance with an optimization criterion, said system comprising:

process control devices for controlling said process in response to a control signal set through control signals;

a plurality of sensors for sensing variable conditions affecting the operation of said process via input signals;

a non-linear programming controller interposed between said sensors and said process control devices for developing control signals applied to said process control devices, where the developing of said control signals is done in accordance with said optimization criterion and where said optimization criterion is a non-linear convex function of said input signals;

said controller including means for iteratively identifying successive tentative strictly feasible control signal sets and selecting each tentative control signal set in the direction of the steepest gradient of a normalized version of the optimization criterion in a space where the constraints on the control signals are also normalized.

7. A method for improving the operational state of a commercial enterprise characterized by a number of resources $x_l$, $(i = 1,n)$ among a plurality of physical resource users subject to constraints $A_{lj}x_l = b_j$ and $x_l \geq 0$ $(i = 1,n; j = 1,m)$ in such manner to optimize a cost function $(1/2)x_lQ_{lj}x_l - c_lx_l$ $(i = 1,n; j = 1,n)$, said method comprising the steps of:

(a) selecting an initial allocation $x^0 = (x_1^0, x_2^0, \cdots x_n^0)$ meeting the said constraints,

(b) using the transformation $x' = L^Tx$ where $Q = LL^T$ to make the constant cost surfaces spherical,

(c) using the scaling $y = D^{-1}x'$ where $\overline{D} = \text{diag}(1/\mu)(x_1^0, x_2^0, \cdots x_n^0)$ to place $x^0$ at a distance $\mu$ from the constraint walls,

(d) computing the descent direction $\delta x_p$ by using the relationship

$\delta x_p = -[I - HA^T(AHA^T)^{-1}A]H(Qx^0 - c)$ where

$H = (\lambda Q + D_{x^0}^{-2})^{-1}$, $D_{x^0}$ is the diagonal matrix containing the components of $x^0$,

$\lambda = \mu^{-2}$, and

I is the identity matrix, or

$\delta x_p = -Z^T(Z(\lambda Q + D^{-2}_{x^0})Z^T)^{-1}Z(Qx^0 - C)$,

where $Z = [(-B^{-1}N)^T I]$, where matrix $A = [B\ N]$

(e) computing the step length $\alpha = \min(\alpha_1, \alpha_2)$, where

$$\alpha_1 = \frac{0.97}{\max_i[\delta x_{p_i} / x_i^0]} \quad \text{and} \quad \alpha_2 = \frac{[\delta x_p^T(Qx^0 - c)]}{[\delta x_p^T Q \delta x_p]},$$

(f) selecting the new allocation $x^1$ by $x^1 = x^0 - \alpha\delta x_p$,

(g) adjusting $\lambda$ for maximum cost reduction,

(h) recentering in the new constant cost surface if $\alpha = \alpha_1$ using the potential push described in the detailed description of the algorithm,

(i) testing for the criterion $\max_i \delta x_{Pl} \leq \varepsilon$ (where $\varepsilon$ is some fixed small positive number),

(j) testing the criterion $[I - A^T(AHA^T)^{-1} AH] [QX^0 - c] \geq 0$

(k) stopping the iterative scheme if (i) and (j) are satisfied, or

(l) going back to step (d), replacing $x^0$ by $x^1$ are repeating,

(m) allocating said resources in accordance with $x^1$ if (i) is satisfied.

8. A method for allocating industrial, financial, or technological resources $x_l$ $(i = 1,n)$ among a plurality of physical resource users subject to constraints $A_{lj}x_l = b_j$ and $x_l \geq 0$ $(i = 1,n, j = 1,m)$ in such manner to optimize a general convex non-linear cost function $f(x)$, said method comprising the steps of:

(a) making a quadratic approximation on $f(x)$ and performing the steps of (a) through (e) of claim 10,

(b) calculating the step length $\alpha$ as per the line search rule

$f(x^0 - \alpha\delta x_p) \leq f(x^0) - \gamma\alpha g^T(x^0)\delta x_p$ where

$\alpha = \min(\alpha_2\beta^h, \alpha_1)$ where h is the first positive integer (including zero) that satisfies the said line search rule,

(c) obtaining the new allocation as per (f) of claim 10,

(d) performing a scale adjusment as in (g) of claim 10,

(e) recentering on constant cost surface as of (h) of claim 10, with the modification that the translation should be stopped, also taking into account the difference between the actual functional value and its quadratic approximation,

(g) allocating the resources like (m) of claim 10.

**9.** Apparatus for allocating resources in an optimal manner among users of said resources comprising means for receiving information concerning said users, concerning the availability of said resources, and concerning the constraints on the allocation of said resources,

means, utilizing the algorithm of claim 7 or claim 8, for iteratively approximating the optimal allocation of said resources among said users,

means for allocating said resources in accordance with the last option of allocating said resources approximated by said iterative approximating means.

**10.** The method of claim 1 where said step of developing said new potential facilities allocation for the next iteration comprises a line search along the direction of said translation vector.

**11.** The method of claim 1 where said step of developing said new potential facilities allocation for the next iteration comprises a line search along the direction of said translation vector to identify a potential facilities allocation whose cost is not higher than the cost of a potential facilities allocation further along said translation vector direction.

**12.** The method of claim 1 where said step of developing said new potential facilities allocation for the next iteration comprises a line search along the direction of said translation vector to identify a potential facilities allocation whose cost is not higher than the cost of a potential facilities allocation further along said translation vector direction and which is not closer than a preselected threshold to violating any one of said constraints.

FIG. 1

FIG. 2

FIG. 3

FIG. 4

FIG. 5

FIG. 6

FIG. 7

FIG. 8

FIG. 9

FIG. 10

FIG. 11

FIG. 12

```
                                    ( START )
                                        │
                                        ▼            ╱─110
                              ┌──────────────────────┐
                              │  PERFORM A QUADRATIC  │
                              │  APPROXIMATION OF COST│
                              └──────────────────────┘
                                        │
                                        ▼            ╱─111
                          YES      ╱─────────────────╲
            ┌────────────────────◄   ARE # VARIABLES  ╲
            │                     ╲  MUCH GRATER THAN  ╱
            │                      ╲ # CONSTRAINTS?   ╱
            │                       ╲───────┬────────╱
            ▼          ╱─112                │ NO
 ┌─────────────────────┐                    ▼           ╱─113
 │   COMPUTE THE       │          ┌──────────────────────────┐
 │  STEP  DIRECTION    │          │  COMPUTE THE STEP         │
 │ USING NULL  SPACE   │          │ DIRECTION USING RANGE SPACE│
 │ (SAME AS PROCESS A) │          │ (SAME AS PROCESS A)       │
 └──────────┬──────────┘          └────────────┬─────────────┘
            │                                   │
            └───────────────┬───────────────────┘
                            ▼                   ╱─114
                 ┌──────────────────────┐
                 │  COMPUTE THE STEP     │
                 │ LENGTH EQUATION (20)  │
                 └──────────┬───────────┘
                            ▼                   ╱─115
                 ┌──────────────────────┐
                 │ PERFORM THE LINE      │
                 │ SEARCH EQUATION (19)  │
                 └──────────┬───────────┘
        ╱─117               ▼                   ╱─116
 ┌──────────────────┐  YES ╱──────────────────╲
 │ PERFORM SCALE    │◄────◄  SCALE ADJUSTMENT   ╲
 │ ADJUSTMENT       │      ╲  NECESSARY?        ╱
 │(SAME AS PROCESS A)│      ╲──────────┬───────╱
 └──────────────────┘                 │ NO
                                       ▼          ╱─118
                            ┌──────────────────────┐
                            │PERFORM THE APPROXIMATE│
                            │  POTENTIAL PUSH       │
                            └──────────┬───────────┘
                                       ▼          ╱─119
                      NO ╱──────────────────────╲
          ┌─────────────◄   CONVERGENCE          ╲
          │             ╲ CONDITIONS MET?        ╱
          │              ╲───────────┬──────────╱
          │                          │ YES
          │                          ▼
          │                       ( END )
```

FIG. 13